# EUROPÄISCHE PATENTSCHRIFT

(11) **EP 2 880 334 B1**
(45) Veröffentlichungstag und Bekanntmachung des Hinweises auf die Patenterteilung: **08.06.2016**
(21) Anmeldenummer: 12747994.7
(22) Anmeldetag: 31.07.2012
(51) Int. Cl.: F16G 15/08, B60P 7/08, B66C 1/66, F16B 45/00

(54) **RINGMUTTER**
RING NUT
ANNEAU À ÉCROU

(43) Veröffentlichungstag der Anmeldung: 10.06.2015
(73) Patentinhaber: Pewag Austria GmbH, 8605 Kapfenberg (AT)
(72) Erfinder: IVANIC, Ranko, 8600 Bruck an der Mur (AT)
(74) Vertreter: Patentanwälte Geyer, Fehners & Partner mbB
(86) Internationale Anmeldenummer: PCT/EP2012/064972
(87) Internationale Veröffentlichungsnummer: WO 2014/019614

(56) Entgegenhaltungen:
- EP-A1- 2 361 870
- WO-A1-2012/072095
- DE-A1- 10 002 899

## Beschreibung

Die Erfindung bezieht sich auf eine Ringmutter, mit einer Tragöse, die in ihrem unteren Bereich ein Fußteil mit einer Durchstecköffnung aufweist und mit einer Hülse, die verdrehbar in der Durchstecköffnung sitzt, mit einer zur Unterseite des Fußteiles hin offenen Gewindebohrung versehen ist, sich über einen umlaufenden Ringbund an ihr auf einer die Durchstecköffnung umlaufenden Anlagefläche am Fußteil abstützt und außen an ihrem der Unterseite des Fußteiles abgewandten oberen Endbereich mit einem nicht-rotationssymmetrischen Kopfprofil versehen ist.

In der Praxis werden nicht-drehbare Ringmuttern häufig dazu eingesetzt, um ohne Werkzeug montieren bzw. demontieren zu können. Allerdings besteht der Nachteil solcher nicht-drehbaren Ringmuttern darin, daß sie sich nicht in Lastrichtung ausrichten lassen und bei ihrer Anwendung die Gefahr eines Losdrehens oder eines Überdrehens gegeben ist. Dabei kann sich der Ring oder der Gewindebolzen verbiegen und sogar brechen, was zu einem erhöhten Verletzungsrisiko für das Arbeitsumfeld und für den Anwender selbst führt.

Um dies zu vermeiden, werden für mehrsträngige oder seitliche Anwendungen in der Regel nur drehbare Ringmuttern empfohlen. Diese lassen sich jedoch nicht ohne zusätzliches Werkzeug (Kabelschlüssel, Ringschlüssel, u. ä.) ein- und ausschrauben.

Eine Ringmutter der eingangs genannten Art ist aus der DE 100 02 899 A1 bekannt. Bei ihr wird die Gewindebohrung zum Einschrauben eines Gewindezapfens von der Bohrung einer in einer Durchstecköffnung des Fußteils der Ringmutter gelagerten Hülse gebildet, deren eines Ende im montierten Zustand etwas über die Unterseite des Fußteiles der Anschlußhülse vorsteht. Bei dieser bekannten Ringmutter ist durch Verwendung einer drehbar im Fußteil angeordneten Hülse, welche die Gewindebohrung für die Aufnahme der anzuschließenden Last aufweist, der Vorteil erreicht, daß sich die Anschlußhülse in ihrer Lage nach der in sie eingeleiteten Kraft einstellen kann. Allerdings läßt sich diese bekannte Ringmutter nicht ohne zusätzliches Werkzeug ein- und ausschrauben. Zudem liegt im angeschlossenen Zustand der aufzunehmenden Last diese nur an der relativ kleinen unteren radialen Endfläche der Hülse an, so daß beim Einschrauben die Last über diese nur relativ kleine Fläche an der Hülse zur Anlage kommt, wodurch relativ große Anpreßkräfte auftreten, was zu Beschädigungen der Hülse und/oder am Anlagebereich der Last führen kann.

In der WO 2012/072095 A1 wird eine Ringschraube beschrieben, bei der in der Durchstecköffnung des Fußteiles der Tragöse ein verdrehbarer, mit einem Gewindeschaft versehener Tragbolzen sitzt und sich mit einem die Durchstecköffnung radial überragenden Bolzenkopf auf einer die Durchstecköffnung umlaufenden, am Fußteil ausgebildeten Anlagefläche auf diesem abstützt. Über mindestens ein am Fußteil angebrachtes Sperrglied kann der Bolzenkopf drehblockiert und eine bewirkte Drehblockierung auch wieder aufgehoben werden. Im montierten Zustand der Ringschraube ist eine Ringscheibe von der Unterseite des Tragbolzens her über dessen Gewindeschaft aufgeschoben, bis sie mit einem axial nach oben gerichteten Ringfortsatz einen gewindefreien Schaftabschnitt des Tragbolzens, unmittelbar axial unter dem Bolzenkopf, umgibt, wo sie verdrehbar zum Tragbolzen, jedoch axial festgelegt, angebracht ist. Bei drehblocklertem Bolzenkopf kann der Tragbolzen durch Verdrehen der Tragöse in eine anzuschließende Last eingeschraubt werden, bis diese gegen die Unterseite der Ringscheibe zur Anlage kommt, wobei diese gegen die Unterseite des Bolzenkopfes mit ihrem Ringfortsatz anliegt und sich dort kraftschlüssig abstützt. Da der Ringfortsatz der Ringscheibe jedoch nur einen relativ kleinen Durchmesser hat, werden durch ihn die auf die Unterseite des Bolzenkopfes wirkenden Abstützkräfte über eine nur relativ kleine Fläche an den Bolzenkopf übertragen, was dort zum Entstehen großer örtlicher Anpreßdrücke und Reibkräfte beim Anschrauben der Last mit der Gefahr des Auftretens von Beschädigungen infolge unerwünschter Reibung führen kann.

Ausgehend hiervon liegt der Erfindung die Aufgabe zugrunde, eine Ringmutter der eingangs genannten Art so weiterzuentwickeln, daß sie ohne zusätzliches Werkzeug (wie etwa Kabelschlüssel, Ringschlüssel u. ä.) für das Ein- und das Ausschrauben des Anschlagpunktes der Last eingesetzt werden kann, dabei eine einfache und zeitsparende Handhabung für den Anwender gegeben ist und sich die angekoppelte Last über eine relativ große Fläche an der in der Durchstecköffnung sitzenden Hülse abstützt.

Erfindungsgemäß wird diese Aufgabe bei einer Ringmutter der eingangs genannten Art dadurch gelöst, daß die Hülse an ihrem unteren Endbereich mit einem Endabsatz mit verkleinertem Durchmesser in eine zentrale Öffnung einer an der Unterseite des Fußteiles liegenden Scheibe hineinragt sowie axial kürzer als die Dicke der Scheibe ausgebildet und dort mit dieser drehfest verbunden ist und daß am Fußteil, benachbart dem Kopfprofil der Hülse, mindestens ein Sperrglied vorgesehen ist, das in eine Sperrstellung, in der es mit dem Kopfprofil zusammenwirkt und dieses in Drehrichtung blockiert, und in eine Neutralstellung verbringbar ist, in der es das Kopfprofil in Drehrichtung freigibt.

Bei der erfindungsgemäßen Ringmutter wird durch die Verwendung mindestens eines verstellbaren Sperrgliedes am Fußteil, und zwar benachbart dem Kopfprofil der Hülse, erreicht, daß das mindestens eine Sperrglied, wenn es in seine Sperrstellung verbracht ist, mit dem Kopfprofil derart zusammenwirken kann, daß es dieses in Drehrichtung blockiert. Wenn das Sperrglied jedoch in seine Neutralstellung verbracht ist, gibt es das Kopfprofil in Drehrichtung frei, wodurch ein freies Verdrehen der Hülse innerhalb des Fußteiles der Ringmutter erfolgen kann.

Gleichzeitig sorgt die Hülse dadurch, daß sie an ihrem unteren Endbereich in eine zentrale Öffnung einer an der Unterseite des Fußteiles liegenden Scheibe hineinragt und dort mit dieser drehfest verbunden ist, an ihrer Unterseite jedoch nicht von ihr vorsteht, dafür, daß die angeschlossene Last beim Einschrauben des Anschlagpunktes gegen die an der Unterseite des Fußteiles angebrachte Scheibe zur Anlage kommt und sich bei Freigabe der Drehblockierung die Scheibe dann in Drehrichtung zusammen mit der Hülse verdrehen kann, da sie drehfest mit dieser verbunden ist. Dadurch, daß die Hülse an der Unterseite der Scheibe nicht über diese vorsteht, wird erreicht, daß die anzubringende Last an der Unterseite der Scheibe über eine vergleichsweise große Fläche anliegt und nicht etwa nur an der Unterseite der Hülse, wie das der Fall wäre, wenn die Hülse dort etwas vorstünde.

Zur Montage der erfindungsgemäßen Ringmutter ist die Verwendung eines zusätzlichen Werkzeuges, wie eines Schraubwerkzeuges o. ä., unnötig, weil allein durch die Verstellung des mindestens einen Sperrgliedes am Fußteil der Tragöse eine Drehblockierung der Hülse durch Verbringen des mindestens einen Sperrgliedes in eine seiner beiden Endstellungen bzw. ein Aufheben der Drehblockierung durch Verbringen des mindestens einen Sperrgliedes in seine andere Einstellposition erreicht wird.

Überdies ist die erfindungsgemäße Ringmutter auch so aufgebaut, daß sie nicht nur drehbar ist, sondern auch als Einheit im zusammengebauten Zustand gehalten wird durch die Befestigung der Hülse an der Scheibe und die Abstützung der Hülse auf der Anlagefläche innerhalb der Tragöse.

Das Drehblockieren der Hülse durch das Sperrglied in dessen Sperrstellung kann in jeder geeigneten Art und Weise durchgeführt werden. Besonders bevorzugt wird jedoch das Sperrglied so ausgebildet und angeordnet, daß es in seiner Sperrstellung das Kopfprofil der Hülse formschlüssig drehblockiert.

Als nicht-rotationssymmetrisches Kopfprofil für die Hülse, das mit dem Sperrglied zusammenwirkt, kann jede geeignete nicht-rotationssymmetrische Form eingesetzt werden. Besonders bevorzugt wird jedoch das Kopfprofil der Hülse als Außensechskant ausgebildet.

Eine bevorzugte Ausgestaltung der erfindungsgemäßen Ringmutter besteht auch darin, daß zwei einander hinsichtlich der Hülse radial gegenüberliegende Sperrglieder am Fußteil vorgesehen sind, deren jedes in eine Sperrstellung und in eine Neutralstellung verbringbar ist, so daß zur Drehblockierung der Hülse die beiden Sperrglieder am Kopfprofil an zwei zueinander um 180° am Umfang desselben versetzte Sperrglieder wirksam werden.

Gemäß einer besonders bevorzugten Ausgestaltung der Erfindung wird vorgesehen, daß jedes Sperrglied in seiner Neutralstellung und/oder in seiner Sperrstellung jeweils lösbar, vorzugsweise mittels einer Rastfeder, verrastet.

Zur drehfesten Befestigung der Hülse an der Scheibe können viele Befestigungsarten eingesetzt werden. Ganz besonders vorteilhaft ist es jedoch, wenn der Endabsatz der Hülse mit der Scheibe verschweißt oder verklebt ist oder beide miteinander verschraubt sind. Auch kann die Verbindung durch Einpressen der Hülse in die zentrale Bohrung der Scheibe oder durch einen Hinterschnitt in der Hülse oder der Scheibe oder auch durch Umbördeln eines zuvor bestehenden Übermaterials, ähnlich einer Vernietung, erfolgen. In jedem Fall muß durch die eingesetzte Verbindung eine Verdrehbarkeit der Hülse im Fußteil der Tragöse sichergestellt sein und die Ringmutter als Einheit im zusammengebauten Zustand gehalten werden.

Die Ausgestaltung jedes Sperrgliedes kann in jeder geeigneten Form ausgeführt werden, die es ermöglicht, das Sperrglied erfindungsgemäß zwischen einer Sperrstellung zum Drehblockieren der Hülse und einer Ausgangsstellung, in der kein Eingriff mit der Hülse stattfindet, zu bewegen bzw. zu verschieben. Ganz besonders vorteilhaft ist es jedoch, wenn jedes Sperrglied als ein Kipphebel ausgebildet ist, der in seiner einen Kippendstellung die gewünschte Drehblockierung des Kopfprofils und damit der Hülse bewirkt, während er in seiner anderen Kippendstellung das Kopfprofil in Drehrichtung freigibt.

Eine ganz besonders bevorzugte Ausgestaltung der erfindungsgemäßen Ringmutter besteht auch darin, daß jeder Kipphebel aus seiner Neutralstellung heraus nur dann in seine Sperrstellung überführbar ist, wenn er einen vorgegebenen Verdrehwinkel (in Richtung auf die Einnahme der Sperrstellung hin) durchlaufen hat, wobei dieser vorgegebene Verdrehwinkel ganz besonders bevorzugt 110° beträgt. Dies bedeutet, daß von der Bedienungsperson der betreffende Kipphebel zur Einnahme der Sperrstellung aus seiner Neutralstellung heraus mindestens um diesen Winkelbereich aktiv bewegt werden muß, damit er anschließend in die andere Endstellung, nämlich in seine Sperrstellung, weiterlaufen kann. Sollte der betreffende Kipphebel von der Bedienungsperson jedoch nicht um diesen vorgegebenen Winkel in Richtung Sperrstellung bewegt werden, wird der Sperrhebel, falls seine Bewegung in dieser Richtung vor Erreichen des vorgegebenen Verdrehwinkels nicht aktiv fortgesetzt wird, je nach seiner Ausgestaltung entweder in der eingenommenen Position verharren oder bevorzugt selbsttätig wieder in seine Ausgangsstellung (Neutralstellung) zurückgeführt. Durch diese Ausgestaltung der erfindungsgemäßen Ringmutter wird die Gefahr eines unabsichtlichen Verstellens der Kipphebel in deren Sperrposition ausgeschlossen.

Eine bevorzugte Ausgestaltung der erfindungsgemäßen Ringmutter, bei der jedes Sperrglied als Kipphebel ausgebildet ist, besteht darin, daß jeder solche Kipphebel in einer oberen Aussparung seitlich der Durchstecköffnung an dem Fußteil sitzt, wobei diese Aussparung senkrecht zur Mittelachse der Durchstecköffnung des Fußteiles ausgerichtet ist und der Kipphebel auf einer senkrecht zur Ausrichtung der Aussparung liegenden Schwenkachse sitzt, die ihrerseits verdrehbar von einer in der Aussparung befestigten Halteklammer gehaltert ist, die einen U-förmigen Querschnitt mit zwei über einen Mittelsteg miteinander verbundenen Seitenschenkel umfaßt. Damit wird eine platzsparende Ausbildung und Anordnung der Kipphebel an der Tragöse bzw. dem Fußteil derselben erreicht, wobei die Gesamtanordnung nicht aufwendig, leicht montierbar und diese Ausbildung der Kipphebel von einer Bedienungsperson unschwer in die beiden Kippendstellungen der Kipphebel verbringbar ist.

Dabei wird bevorzugt jeder Kipphebel auf seiner der Halteklammer zugewandten Unterseite mit einer Formgebung versehen, die mit einem vom Mittelsteg der Halteklammer vorspringenden Federsteg derart in Wirkverbindung steht, daß sie bei einer Kippbewegung des Kipphebels beim Überlaufen des Federsteges diesen elastisch verformt, wobei der Federsteg bei Erreichen seiner Kippendstellung wieder seine Ausgangsform einnimmt, in welcher er über seine Formgebung den Kipphebel in der jeweiligen Kippendstellung verrastet. Diese Ausgestaltung ist wiederum sehr platzsparend, einfach im Aufbau, wirkungsvoll in der Funktion und ist auch für eine Übertragung sehr großer Drehmomente von der Ringöse auf die Hülse geeignet.

Bei der erfindungsgemäßen Ringschraube muß zum Einschalten des Sperrgliedes kein getrenntes Werkzeug mehr eingesetzt werden, so daß auch die Gefahr eines Werkzeugverlustes nicht mehr besteht. Das Anbringen des mindestens einen Sperrgliedes radial neben dem Kopfprofil der Hülse und seine Befestigung dort an dem Fußteil führt insgesamt zu einer außerordentlich platzsparenden Anordnung, bei welcher das Sperrglied so gestaltet werden kann, daß es radial nach außen nicht über die äußere Umfangsfläche des Fußteiles mehr übersteht, so daß die Benutzung der erfindungsgemäßen Ringmutter auch in einem engen Raum möglich ist, wenn die Tragöse aufgrund der ihr vorgegebenen Form dort überhaupt verdrehbar ist.

Die Erfindung wird nachfolgend anhand der Zeichnungen im Prinzip beispielshalber noch näher erläutert. Es zeigen:
- Fig. 1: eine perspektivische Explosionsdarstellung einer erfindungsgemäßen Ringmutter;
- Fig. 2: eine perspektivische Darstellung der Ringmutter aus Fig. 1 im montierten Zustand, wobei jedoch die Tragöse mit ihrem Fußteil in einer durch die Längsachse ihrer Durchsteckbohrung verlaufenden Ebene geschnitten ist;
- Fig. 3: eine erfindungsgemäße Ringmutter entsprechend den Fig. 1 und 2, in perspektivischer Darstellung im montierten Zustand sowie in Sperrstellung der Sperrglieder;
- Fig. 4: die Ringmutter aus Fig. 3, wobei sich die Sperrglieder jedoch in ihrer Neutralstellung befinden, sowie
- Fig. 5: eine vergrößerte perspektivische Darstellung einer für die Lagerung eines Sperrgliedes eingesetzten Halteklammer.

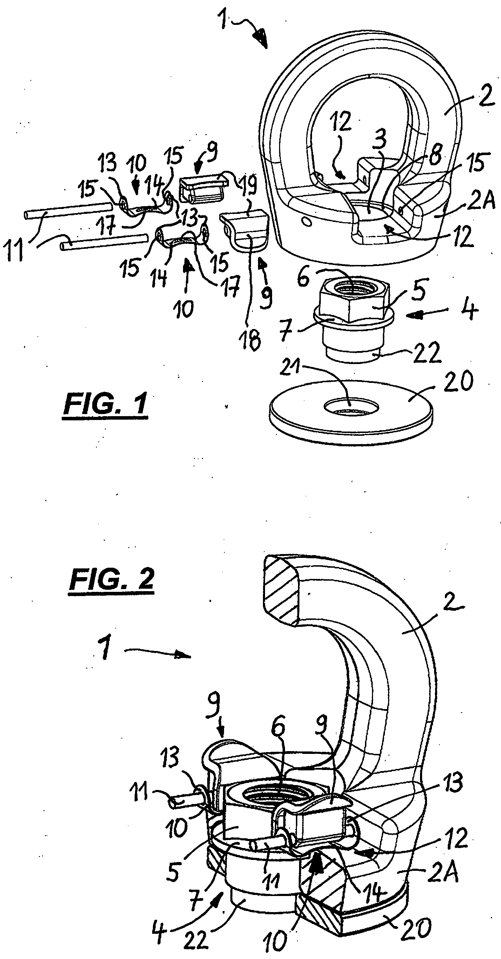

Die Figuren zeigen eine Ringschraube 1, die eine Tragöse 2 umfaßt, welche an ihrem unteren Abschnitt ein Fußteil 2A ausbildet, in dem eine Durchstecköffnung 3 zum Hindurchstecken einer Hülse 4 vorgesehen ist (vgl. Fig. 1).

Die Hülse 4 ist an ihrem oberen, der Tragöse 2 zugewandten Endbereich auf ihrer Außenseite mit einem Kopfprofil 5 versehen und weist eine zentrale Innenbohrung mit einem Innengewinde 6 auf (vgl. Fig. 1), das im dargestellten Ausführungsbeispiel über die gesamte axiale Länge der Hülse 4 vorgesehen ist.

In das Innengewinde 6 ist, von der der Tragöse 2 abgewandten unteren Seite der Hülse 4 her, eine Schraube, ein Schraubbolzen o. ä. (nicht gezeigt) einschraubbar, mittels dessen ein Gegenstand bzw. eine Last an die Hülse 4 der Ringmutter 1 angekoppelt werden kann.

Das Kopfprofil 5 am oberen Endbereich der Hülse 4 ist in Form eines Außensechskants ausgebildet, der auf einem umlaufenden Ringbund 7 der Hülse 4 sitzt, welcher mit seiner Unterseite auf einer am Fußteil 2A der Tragöse 2 ausgebildeten, die Durchstecköffnung 3 umlaufenden ebenen Anlagefläche 8 anliegt und sich auf dieser nach unten hin abstützt (Fig. 1, Fig. 2).

Die perspektivische Darstellung der Fig. 2 zeigt die Tragöse 2 aus Fig. 1 im zusammengebauten Zustand, wobei allerdings die Tragöse 2 und ihr Fußteil 2A in einer vertikalen Mittelebene (in der auch die Mittelachse der Hülse 4 liegt) geschnitten dargestellt sind, während die anderen Elemente der Ringmutter 1 nicht geschnitten gezeigt sind.

Aus der Darstellung der Fig. 2 ist ersichtlich, daß die Hülse 4 durch die Durchstecköffnung 3 hindurchgesteckt ist, wobei der umlaufende Ringbund 7 der Hülse 4 auf der ebenen Anlagefläche 8 des Fußteiles 2A aufliegt.

Die durch die Durchstecköffnung 3 hindurchgesteckte Hülse 4 ist an ihrem unteren, also dem von der Tragöse 2 abgewandten Endbereich, mit einem Endabsatz 22 eines kleineren Durchmessers als des sonstigen Durchmessers der Durchstecköffnung 3 versehen, der in eine zentrale Bohrung 21 einer unteren Scheibe 20 hineinragt (vgl. Fig. 2) und im montierten Zustand mit dieser Scheibe 20 in geeigneter Weise verbünden ist, wobei durch Verschrauben, Verschweißen, Verkleben, Verpressen oder in anderer geeigneter Weise eine drehfeste Verbindung zwischen der Scheibe 20 und der Hülse 4 geschaffen wird. Beide Teile bilden im montierten Zustand eine konstruktive Einheit, was infolge der Abstützung der Hülse 4 über deren umlaufenden Ringbund 7 auf der ebenen Anlagefläche 8 des Fußteiles 2A der Tragöse 2 einerseits und der Abstützung der Scheibe 20 an der Unterseite des Fußteiles 2A andererseits dazu führt, daß die Gesamtanordnung von Tragöse mit Fußteil 2A, durch die Durchstecköffnung 3 hindurch verlaufender Hülse 4 und unten angebrachter Scheibe 20 eine in sich geschlossene Baueinheit ergeben.

Der untere Endabsatz 22 der Hülse 4 hat eine axiale Länge, die etwas kürzer als die Dicke der Scheibe 20 ist, so daß im zusammengebauten Zustand die Hülse 4 auf der Unterseite der Scheibe 20 nicht über deren untere Endfläche nach außen vorragt.

Wird im zusammengebauten Zustand von der Unterseite her eine Last z. B. über einen (in den Figuren nicht gezeigten) Gewindebolzen durch Einschrauben dessen Gewindes in das Innengewinde 6 der Hülse 4 an der Ringmutter 1 befestigt, dann wird dieser Gewindebolzen so weit in das Innengewinde 6 der Hülse 4 eingeschraubt, bis die Oberseite der durch ihn anzuschließenden Last an der Unterseite der Scheibe 20 zur Anlage kommt.

Ist diese Montage beendet, werden die Kippelemente 9 aus ihrer Sperrstellung, in die sie für die Montage gebracht waren, in ihre neutrale Ausgangsstellung zurückgekippt und geben damit das Kopfprofil 5 der Hülse 4 frei, so daß diese anschließend innerhalb der Durchstecköffnung 3 der Tragöse 2 relativ zu dieser verdreht werden kann, um sich innerhalb der Ringmutter 1 in optimaler Weise in Lastrichtung ausrichten zu lassen.

Bei der hierfür erforderlichen Drehbewegung dreht jedoch die Einheit Hülse 4/Scheibe 20 gemeinsam, so daß die Drehung der angekoppelten Last ohne eine Relativbewegung zwischen der Oberseite der Last und der Unterseite der Scheibe 20 stattfinden kann. Eine Relativbewegung tritt dabei jedoch zwischen der Oberseite der Scheibe 20 und der Unterseite des Fußteiles 2A der Tragöse 2 auf, wobei die dabei wirksamen Reibungskräfte sich entweder durch eine geeignete Reibpaarung des Materials an der Oberfläche der Scheibe 20 und der Unterseite des Fußteiles 2A optimieren lassen (etwa durch Anbringen geeigneter Reibauflagen) oder auch im montierten Zustand die Lage der Scheibe 20 an der Unterseite des Fußteiles 2A so eingestellt ist, daß zwischen beiden ein ganz kleines Spiel gegeben ist, das bei angehängter Last ein Verdrehen der Scheibe 20 relativ zum Fußteil 2A so gut wie ohne Reibkräfte zwischen der Oberseite der Scheibe 20 und der Unterseite des Fußteiles 2A zuläßt, so daß beim Verdrehen nur die Reibkräfte wirksam werden, die zwischen der Hülse 4 und der Wandung der Durchstecköffnung 3 im Fußteil 2A bzw. zwischen dem Ringbund 7 und der Anlagefläche 8 des Fußteiles 2A, auf der sich der Ringbund 7 der Hülse 4 abstützt, auftreten.

Wie ferner aus den Fig. 1 und 2 entnommen werden kann, weist die Ringmutter 1 außerdem noch zwei Kipphebel 9, zwei Halteklammern 10 für diese und zwei Schwenkachsen 11 auf, deren jede zur verkippbaren Anordnung eines Kipphebels 9 an einer Halteklammer 10 dient.

Wie weiter aus den Fig. 1 und 2 ersichtlich ist, ist im oberen Bereich des Fußteiles 2A, der Durchstecköffnung 3 zur Aufnahme der Hülse 4 benachbart, beidseits der Durchstecköffnung 3 jeweils eine Ausnehmung 12 von oben her am oberen Bereich des Fußteiles 2A ausgebildet.

Die beiden Ausnehmungen 12 sind so angeordnet, daß sie bezüglich der Mittelachse der Durchstecköffnung 3 radial einander gegenüber liegen und zueinander ausgerichtet sind, d. h. die Ausrichtung beider Ausnehmungen 12 verläuft senkrecht zur Längsmittelachse der Hülse 4 und gleichzeitig auch senkrecht zur Aufspannebene der Tragöse 2, wie dies aus der Darstellung der Fig. 1 besonders gut entnommen werden kann.

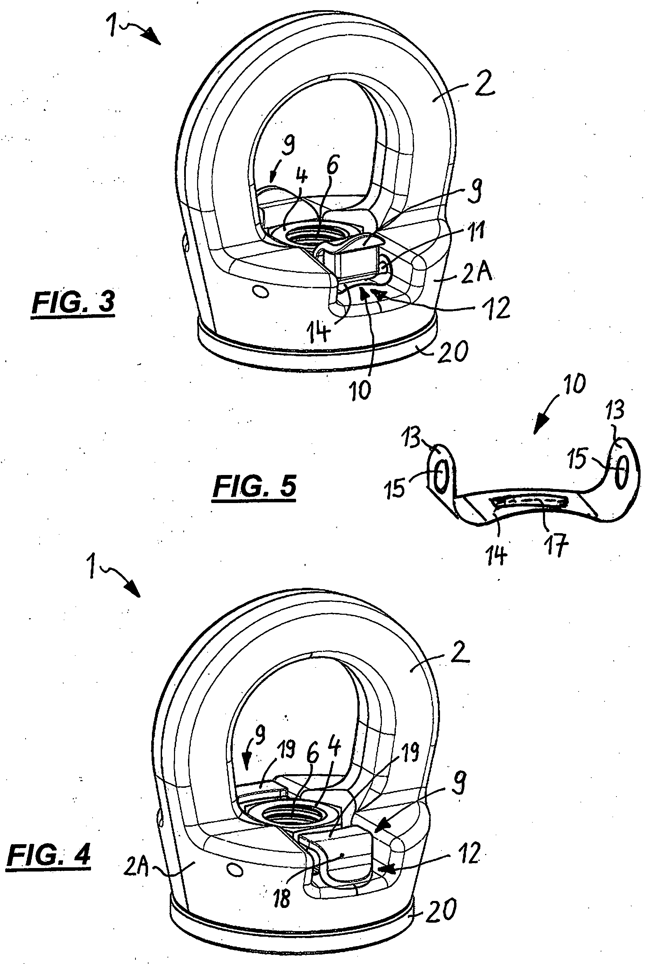

In jeder Ausnehmung 12 sitzt jeweils eine Halteklammer 10, wie sie in Fig. 5 im einzelnen dargestellt ist. Wie hieraus ersichtlich, weist jede Halteklammer 10 zwei Seitenschenkel 13 auf, die parallel zueinander liegen und an einem ihrer Enden jeweils über einen Mittelsteg 14 miteinander verbunden sind.

Dabei ist in jedem Seitenschenkel 13 eine Öffnung 15 ausgebildet, wobei die beiden Öffnungen 15 der Seitenschenkel 13 so zueinander ausgerichtet sind, daß durch sie jeweils eine Schwenkachse 11 (vgl. Fig. 1) hindurchgesteckt werden kann, auf der ein Kipphebel 9 verschwenkbar und seitlich sowie in Verschwenkrichtung geführt sitzt. Dieser Zustand ist in Fig. 2 gezeigt.

Die Ausnehmungen 12 haben jeweils eine Tiefe und eine Weite (parallel zur Aufspannebene der Tragöse 2 gesehen) derart, daß bei in ihnen jeweils montierten Kipphebeln 9 in deren in Fig. 4 dargestellter Ausgangsstellung (Neutralstellung, in welcher kein Wirkeingriff mit dem Kopfprofil 5 der Hülse 4 vorliegt) die jeweils oben liegende Fläche des Kipphebels 9 ungefähr auf dem dort seitlich der Ausnehmung 12 vorliegenden Oberflächenniveau des Fußteiles 2A der Tragöse 2 liegt. Die Weite jeder Ausnehmung 12 ist so gewählt, daß in ihr jeweils die zugeordnete Halteklammer 10 und der entsprechende Kipphebel 9 mit etwas seitlichem Spiel montiert werden können.

Dabei ist die Schwenkachse 11 für jeden Kipphebel 9 deutlich länger als die seitliche Weite der betreffenden Ausnehmung 12, wobei die Schwenkachse 11 beidseits der Ausnehmung 12 in jeweils eine dort seitlich im Fußteil 2A angebrachte Lageröffnung 15 hineinragt. Hierbei kann der jeweilige Kipphebel 9 entweder verschwenkbar auf der zugeordneten Schwenkachse 11 sitzen und diese in den Lageröffnungen 15 unverdrehbar mit festem Sitz angebracht sein. Allerdings kann jeder Kipphebel 9 aber auch fest auf der Schwenkachse 11 angebracht und mit dieser in den Öffnungen 15 in den Seitenschenkeln 13 jeder Halteklammer 10 sowie in den Lageröffnungen 16 verschwenkbar vorgesehen sein.

In Fig. 5 ist eine solche Halteklammer 10 in vergrößerter perspektivischer Darstellung gezeigt.

Wie aus Fig. 5 hervorgeht, ist im mittleren Bereich des Mittelsteges 14 der Halteklammern 10 ein nach oben gewölbter Federsteg 17 in Form einer federnden Auswölbung vorgesehen, der etwas zur Lage der Öffnungen 15 versetzt liegt. Dieser Federsteg 17 sitzt dabei so am Mittelsteg 14 der Halteklammer 10, daß bei einer Druckeinwirkung von oben her auf den Federsteg 17 dieser so deformiert wird, daß der Krümmungsradius seiner Auswölbung größer und damit die Auswölbung selbst flacher wird, wobei der Federsteg 17 so an der Halteklammer 10 angebracht ist, daß er eine bei seinem Flachdrücken auftretende Längenänderung relativ zum Mittelsteg 14 der Halteklammer 10 ausgleichen kann.

An der dem Mittelsteg 14 der Halteklammer 10 zugewandten Unterseite jedes Kipphebels 9 ist dieser in seinem mittleren Bereich, der im montierten Zustand der Lage des Federsteges 17 in der Halteklammer 10 entspricht, mit einer Formgebung derart versehen, daß diese beim Verkippen des Kipphebels 9 mit dem Federsteg 17 der Halteklammer 10 in Wirkkontakt und Wirkeingriff tritt. Beim Verkippen des Kipphebels 9 läuft dabei ein an dessen Unterseite angebrachter Vorsprung von der einen Seite des Mittelsteges 14 der Halteklammer 10 aus kommend auf den Federsteg 17 auf und über diesen hinweg, wobei der Federsteg 17 nach unten gedrückt und dabei elastisch deformiert wird. Dabei drückt er mit seiner elastischen Rückstellkraft gegen den genannten Vorsprung. Sobald dieser über die Mitte des Federsteges 17 hinweg geführt wurde, drückt letzterer mit seiner elastischen Rückstellkraft gegen eine Seitenflanke dieses Vorsprungs mit der Folge, daß dieser in Kipprichtung federnd vorgespannt wird und in die entsprechende Kippendstellung hin gedrückt wird. Dies gilt für beide Kipprichtungen des Kipphebels 9, wobei durch eine entsprechende Gestaltung des Vorsprungs an diesem sichergestellt werden kann, daß er in jeder der beiden Kippendstellungen des Kipphebels 9 noch von einer gewissen elastischen Rückstellkraft des Federsteges 17 beaufschlagt und damit in dieser Kippendstellung unter Federvorspannung gehalten wird. Dabei kann auch noch durch eine in den Figuren nicht näher dargestellte Rasteinrichtung bewirkt werden, daß der Kipphebel 9 in seinen beiden Verschwenk-Endstellungen jeweils in seiner Lage verriegelt wird.

Wie die Darstellung der Fig. 1 ferner zeigt, besteht jeder Kipphebel 9 aus einem ersten Kipphebelschenkel 18 und einem zweiten, unter einem Winkel zu diesem von etwa 90° geneigt angebrachten Kipphebelschenkel 19 (vgl. Fig. 1 und 4).

In Neutralstellung des Kipphebels 9, in der dieser mit dem Kopfprofil 5 der Hülse 4 nicht in Wirkeingriff steht und letztere frei in der Durchstecköffnung 3 der Tragöse 2 verdrehbar ist (vgl. Fig. 4), ist jeder Kipphebel 9 so verkippt, daß er in seine äußere Kipphebelendstellung verklappt ist, in der er über den ersten Kipphebelschenkel 18 sich an bzw. in der Ausnehmung 12 abstützt. Dabei ist der zweite Kipphebelschenkel 19 nach oben gekippt, wobei seine Außenfläche senkrecht zur Längsmittelachse der Durchstecköffnung 3 liegt.

Wenn nun der Kipphebel 9 in seine Sperrstellung verkippt ist, wie dies in den Fig. 2 und 3 dargestellt ist, stützt er sich in dieser Kipphebelendstellung auf dem zweiten Kipphebelschenkel 19 ab, der dann, wie diese Figuren zeigen, mit seiner Außenseite gegen eine zugewandte Seitenfläche des Außensechskants des Kopfprofils 5 der Hülse 4 anliegt und in dieser Stellung unter Federvorspannung durch den Federsteg 17, der gegen den Vorsprung am Kipphebel 9 drückt, gehalten wird.

In dieser Sperrstellung ist dann eine Verdrehung der Hülse 4 gegenüber dem Fußteil 2A bzw. der Tragöse 2 nicht mehr möglich, weil die Außenkontur des Außensechskants des Kopfprofils 5 durch das beidseitige Anliegen der Außenflächen der zwei Kipphebelschenkel 19 der beiden Kipphebel 9 gegenüber der Tragöse 2 in Drehrichtung-blockiert wird.

In dieser Sperrstellung kann durch Drehen der Ringmutter 1 ein Drehmoment über die Kipphebel 9 und das Kopfprofil 5 an die Hülse 4 übertragen werden, wodurch das Einschrauben eines Gewindebolzens o. ä. zur Befestigung eines anzuschließenden Körpers an der Ringmutter 1 erfolgen kann. Sobald jedoch der Kipphebel 9 in seine andere Kipphebelendstellung, nämlich die Neutralstellung, zurückgekippt ist, kann sich die Hülse 4 mit der an sie angeschlossenen Last relativ zur Tragöse 2 wieder drehen.

Die Formgebung der beim Verkippen der Kipphebel 9 zusammenwirkenden Elemente kann nicht nur so gewählt werden, daß in jeder Kippendstellung eines Kipphebels 9 eine vorgegebene Vorspannung der ihn in seine Kippendstellung drückenden Federkraft durch den Federsteg 17 erreicht wird. Die Formgebung der Elemente kann auch noch so vorgenommen werden, daß eine bestimmte, vorgegebene Größe der Verschwenkung eines Kipphebels 9 aus jeder seiner Endstellungen heraus erst überwunden werden muß, bevor die elastische Rückstellkraft des Federsteges 17 den soweit verkippten Kipphebel 9 unter Vorspannung in Richtung auf seine andere Kippendstellung hin drückt und auslenkt, um zu vermeiden, daß er aus einer Kippendstellung versehentlich und unabsichtlich verstellt werden könnte.

Falls gewünscht, besteht auch die Möglichkeit, die Hülse 4 an ihrem oberen Ende mit einem Formkopf, etwa einem Sechskantformkopf, zu versehen, um als Zusatzfunktion auch noch eine Montage mittels eines Werkzeugs einer entsprechenden Schlüsselweite zu ermöglichen.

## Patentansprüche

1. Ringmutter (1) mit einer Tragöse (2), die in ihrem unteren Bereich ein Fußteil (2A) mit einer Durchstecköffnung (3) aufweist, und mit einer Hülse (4), die verdrehbar in der Durchstecköffnung (3) sitzt, mit einer zur Unterseite des Fußteiles (2A) hin offenen Gewindebohrung (6) versehen ist, sich über einen umlaufenden Ringbund (7) an ihr auf einer die Durchstecköffnung (3) umlaufenden Anlagefläche (8) am Fußteil (2A) abstützt und außen an ihrem der Unterseite des Fußteiles (2A) abgewandten oberen Endbereich mit einem nichtrotationssymmetrischen Kopfprofil (5) versehen ist, ***dadurch gekennzeichnet,* daß** die Hülse (4) an ihrem unteren Endbereich mit einem Endabsatz (22) mit verkleinertem Durchmesser in eine zentrale Öffnung (21) einer an der Unterseite des Fußteiles (2A) liegenden Scheibe (20) hineinragt, wobei dieser Endabsatz axial kürzer als die Dicke der Scheibe (20) ausgebildet und mit dieser drehfest verbunden ist, und daß am Fußteil (2A), benachbart dem Kopfprofil (5) der Hülse (4), mindestens ein Sperrglied (9) vorgesehen ist, das in eine Sperrstellung, in der es mit dem Kopfprofil (5) zusammenwirkt und dieses in Drehrichtung blockiert, und in eine Neutralstellung verbringbar ist, in der es das Kopfprofil (5) in Drehrichtung freigibt.

2. Ringmutter (1) nach Anspruch 1, **dadurch gekennzeichnet, daß** das mindestens eine Sperrglied (9) in seiner Sperrstellung das Kopfprofil (5) der Hülse (4) formschlüssig drehblockiert.

3. Ringmutter (1) nach Anspruch 1 oder 2, **dadurch gekennzeichnet, daß** das Kopfprofil (5) der Hülse (4) als Außensechskant ausgebildet ist.

4. Ringmutter (1) nach einem der Ansprüche 1 bis 3, **dadurch gekennzeichnet, daß** zwei einander hinsichtlich der Hülse (4) radial gegenüberliegende Sperrglieder (9) am Fußteil (2A) vorgesehen sind.

5. Ringmutter (1) nach einem der Ansprüche 1 bis 4, **dadurch gekennzeichnet, daß** jedes Sperrglied (4) in seiner Neutralstellung und/oder in seiner Sperrstellung jeweils lösbar verrastet.

6. Ringmutter (1) nach einem der Ansprüche 1 bis 5, **dadurch gekennzeichnet, daß** der Endabsatz (22) der Hülse (4) mit der Scheibe (20) verschweißt ist.

7. Ringmutter (1) nach einem der Ansprüche 1 bis 5, **dadurch gekennzeichnet, daß** der Endabsatz (22) der Hülse (4) mit der Scheibe (21) verschraubt ist.

8. Ringmutter (1) nach einem der Ansprüche 1 bis 5, **dadurch gekennzeichnet, daß** der Endabsatz (22) der Hülse (4) durch Verkleben mit der Scheibe (20) verbunden ist.

9. Ringmutter (1) nach einem der Ansprüche 1 bis 8, **dadurch gekennzeichnet, daß** jedes Sperrglied als ein Kipphebel (9) ausgebildet ist.

10. Ringmutter (1) nach Anspruch 9, **dadurch gekennzeichnet, daß** jeder Kipphebel (9) aus seiner Neutralstellung heraus nur dann in seine Sperrstellung überführbar ist, wenn er einen vorgegebenen Verdrehwinkel durchlaufen hat.

11. Ringmutter (1) nach Anspruch 10, **dadurch gekennzeichnet, daß** der vorgegebene Verdrehwinkel 110° beträgt.

12. Ringmutter nach einem der Ansprüche 9 bis 11, **dadurch gekennzeichnet, daß** jedes als Kipphebel (9) ausgebildete Sperrglied in einer oberen Aussparung (12) seitlich der Durchstecköffnung (3) an dem Fußteil (2A) sitzt, wobei die Aussparung (12) senkrecht zur Mittelachse der Durchstecköffnung (3) ausgerichtet ist und das Sperrglied (9) auf einer senkrecht zur Ausrichtung der Aussparung (12) liegenden Schwenkachse sitzt, die ihrerseits verdrehbar von einer in der Aussparung (12) befestigten Halteklammer (10) gehaltert ist, die einen U-förmigen Querschnitt mit zwei über einen Mittelsteg (14) miteinander verbundenen Seitenschenkeln (13) umfaßt.

13. Ringmutter nach Anspruch 12, **dadurch gekennzeichnet, daß** jeder Kipphebel (9) auf seiner der Halteklammer (10) zugewandten Unterseite mit einem Vorsprung versehen ist, der mit einem vom Mittelsteg (14) der Halteklammer (10) vorspringenden Federsteg (17) derart in Wirkverbindung steht, daß er bei einer Kippbewegung des Kipphebels (9) beim Überlaufen des Federsteges (17) diesen elastisch verformt, wobei der Federsteg (17) bei Erreichen der Kippendstellung wieder seine Ausgangsform einnimmt, in der er über den Vorsprung den Kipphebel (9) in der jeweiligen Kippendstellung verrastet.

## Claims

1. Ring nut (1) with a lifting eye (2), which comprises in its lower region a base part (2A) with a penetration opening (3), and with a sleeve (4), which is seated rotatably in the penetration opening (3), with a threaded bore (6) open toward the lower side of the base part (2A), supported by means of a rotating annular collar (7) on its seating surface (8) surrounding the penetration opening (3) on the base part (2A) and provided externally on its upper end region facing away from the underside of the base part (2A) with a non-rotationally symmetrical head profile (5), ***characterized in that*** the lower end region of the sleeve (4) protrudes with an end shoulder (22) with a smaller diameter into a central opening (21) of a disc (20) lying on the underside of the base part (2A), with said end shoulder being embodied axially shorter than the thickness of the disc (20) and being connected thereto in a rotationally fixed manner, and that on the base part (2A), adjacent to the head profile (5) of the sleeve (4), at least one locking member (9) is provided which can be brought into a locking position in which it cooperates with the head profile (5) and locks this in the rotational direction and can be brought into a neutral position in which it releases the head profile (5) in the direction of rotation.

2. Ring nut (1) according to claim 1, **characterized in that** the at least one locking member (9) locks the head profile (5) of the sleeve (4) in its locking position in a positive fitting manner.

3. Ring nut (1) according to claim 1 or 2, **characterized in that** the head profile (5) of the sleeve (4) is embodied as a hexagon head.

4. Ring nut (1) as claimed in any one of claims 1 to 3, **characterized in that** two locking members (9) facing each other radially with respect to the sleeve (4) are provided on the base part (2A).

5. Ring nut (1) according to any one of claims 1 to 4, **characterized in that** each locking member (4) is locked in its neutral position and/or in its locking position, in a detachable manner in each case.

6. Ring nut (1) according to any one of claims 1 to 5, **characterized in that** the end shoulder (22) of the sleeve (4) is welded to the disc (20).

7. Ring nut (1) according to any one of claims 1 to 5, **characterized in that** the end shoulder (22) of the sleeve (4) is screwed to the disc (21).

8. Ring nut (1) according to any one of claims 1 to 5, **characterized in that** the end shoulder (22) of the sleeve (4) is connected to the disc (20) by adhesion.

9. Ring nut (1) according to any one of claims 1 to 8, **characterized in that** each locking member is embodied as a rocker arm (9).

10. Ring nut (1) according to claim 9, **characterized in that** each rocker arm (9) can only be moved from its neutral position into its locking position when it has passed through a predetermined angle of rotation.

11. Ring nut (1) according to claim 10, **characterized in that** the predetermined angle of rotation is 110°.

12. Ring nut according to any one of claims 9 to 11, **characterized in that** each locking member embodied as a rocker arm (9) is seated in an upper recess (12) to the side of the penetration opening (3) on the base part (2A), with the recess (12) being aligned perpendicularly to the middle axis of the penetration opening (3) and the locking member (9) sitting on a pivot axis lying perpendicular to the alignment of the recess (12), said pivot axis being in turn held rotatably by a retaining clamp (10) secured in the recess with said retaining clamp comprising a U-shaped cross-section with two side arms connected to each other via a centre bar.

13. Ring nut according to claim 12, **characterized in that** each rocker arm (9) is provided on its underside facing the retaining clamp (10) with a projection which is in active connection with a spring bar (17) protruding from the centre base (14) of the retaining clamp (10) such that on a tilting movement of the rocker arm (9), when the spring bar (17) is overrun, said projection elastically deforms said spring bar, with, when the tilt end-position is reached, said spring bar (17) resuming its starting shape in which it locks the rocker arm in the respective tilt end-position by means of the projection.

## Revendications

1. Anneau à écrou (1) avec un oeillet porteur (2) qui présente dans sa zone inférieure une partie de pied (2A) avec une ouverture de passage (3), et avec un manchon (4) qui repose en rotation dans l'ouverture de passage (3), qui est muni d'un alésage fileté (6) ouvert vers le côté inférieur de la partie de pied (2A), s'appuie sur la partie de pied (2A) par le biais d'un collet annulaire (7) périphérique sur sa face d'appui (8) entourant l'ouverture de passage (3) et est muni extérieurement, sur sa zone d'extrémité supérieure éloignée du côté inférieur de la partie de pied (2A), d'un profil de tête (5) non symétrique en rotation, ***caractérisé en ce que**,* à sa zone d'extrémité inférieure, le manchon (4), avec un gradin d'extrémité (22) d'un diamètre qui se rétrécit, dépasse dans une ouverture (21) centrale d'un disque (20) situé sur le côté inférieur de la partie de pied (2A), ce gradin d'extrémité étant constitué d'une façon axialement plus courte que l'épaisseur du disque (20) et étant raccordé bloqué en rotation avec ce disque, et **en ce que**, sur la partie de pied (2A), au voisinage du profil de tête (5) du manchon (4), au moins un élément de blocage (9) est prévu, qui peut être amené dans une position de blocage dans laquelle il coopère avec le profil de tête (5) et bloque celui-ci dans le sens de rotation, et dans une position neutre dans lequel il libère le profil de tête (5) dans le sens de rotation.

2. Anneau à écrou (1) selon la revendication 1, **caractérisé en ce que** l'élément de blocage (9) au moins au nombre de un, dans sa position de blocage,bloque en rotation, par liaison de forme, le profil de tête (5) du manchon (4).

3. Anneau à écrou (1) selon la revendication 1 ou 2, **caractérisé en ce que** le profil de tête (5) du manchon (4) est constitué en tant que six-pans extérieur.

4. Anneau à écrou (1) selon l'une des revendications 1 à 3, **caractérisé en ce qu'**il est prévu deux organes de blocage (9) sur la partie de pied (2A) se faisant face réciproquement radialement par rapport au manchon (4).

5. Anneau à écrou (1) selon l'une des revendications 1 à 4, **caractérisé en ce que** chaque élément de blocage (4) s'encliquette respectivement de façon détachable dans sa position neutre et/ou dans sa position de blocage.

6. Anneau à écrou (1) selon l'une des revendications 1 à 5, **caractérisé en ce que** le gradin d'extrémité (22) du manchon (4) est assemblé par soudage avec le disque (20).

7. Anneau à écrou (1) selon l'une des revendications 1 à 5, **caractérisé en ce que** le gradin d'extrémité (22) du manchon (4) est assemblé par vissage avec le disque (21).

8. Anneau à écrou (1) selon l'une des revendications 1 à 5, **caractérisé en ce que** le gradin d'extrémité (22) du manchon (4) est assemblé par encollage avec le disque (20).

9. Anneau à écrou (1) selon l'une des revendications 1 à 8, **caractérisé en ce que** chaque élément de blocage est constitué en tant que levier basculant (9).

10. Anneau à écrou (1) selon la revendication 9, caractérisé en ceque chaque levier basculant (9) ne peut être transféré de sa position neutre vers sa position de blocage que lorsque qu'il a parcouru un angle de torsion prédéfini.

11. Anneau à écrou (1) selon la revendication 10, **caractérisé en ce que** l'angle de torsion prédéfini est égal à 110°.

12. Anneau à écrou selon l'une des revendications 9 à 11, **caractérisé en ce que** chaque élément de blocage constitué en tant que levier basculant (9) repose sur la partie de pied (2A) dans un évidement (12) supérieur sur le côté de l'ouverture de passage (3), l'évidement (12) étant orienté perpendiculairement à l'axe central de l'ouverture de passage (3), et l'élément de blocage (9) reposant sur un axe de pivotement, situé perpendiculairement à l'orientation de l'évidement (12), qui est de son côté retenu en rotation par une agrafe de retenue (10), fixée dans l'évidement (12), qui comprend une section transversale en U avec deux branches latérales (13) raccordées l'une à l'autre par le biais d'une entretoise médiane (14).

13. Anneau à écrou selon la revendication 12, **caractérisé en ce que** chaque levier basculant (9) est, sur son côté inférieur tourné vers l'agrafe de retenue (10), muni d'une saillie qui est en liaison opératoire avec une entretoise à ressort (17) faisant saillie à partir de l'entretoise médiane (14) de l'agrafe de retenue (10) de telle sorte que, lors d'un mouvement de bascule du levier basculant (9), elle déforme élastiquement l'entretoise à ressort (17) lorsqu'elle dépasse celle-ci, l'entretoise à ressort (17) reprenant, lorsque la position extrême de basculement est atteinte, sa forme initiale dans laquelle elle encliquette, par le biais de la saillie, le levier basculant (9) dans la position extrême de basculement respective.
